# DEMANDE DE BREVET EUROPEEN

(11) **EP 2 439 661 A1**
(43) Date de publication de la demande: **11.04.2012**
(21) Numéro de dépôt: 11306301.0
(22) Date de dépôt: 07.10.2011
(51) Int. Cl.: G06F 17/30, G06Q 10/00

(54) **Procédé de saisie d'un produit d'une installation électrique**

(30) Priorité: 07.10.2010 FR 1058160
(71) Demandeur: Hager-Electro SAS (Société par Actions Simplifiée), 67210 Obernai (FR)
(72) Inventeur: Dennler, Phillipe, 67400 Illkirch-Graffenstaden (FR); Biancolin Luca, 24042 Bergamo (IT); Routchenko Stephane, 57200 Sarreguemines (FR); Ammann, Gabriele, 57200 Sarreguemines (FR); Pina, Nuno, 1685-385 Canecas (PT); Gorriz, Nuria, 08004 Barcelona (ES); Ehrhart, Alain, 67210 Obernai (FR); Hervouët, Jean Michel, 67000 Strasbourg (FR)
(74) Mandataire: Nuss, Laurent

(57) **Abrégé**

La présente invention a pour objet un procédé de saisie pour un produit destiné à une installation électrique d'un bâtiment, ledit produit étant pourvu d'un identifiant produit.

Ce procédé est caractérisé en ce qu'il consiste à saisir l'identifiant produit au moyen d'un terminal relié à une base de données, et à enregistrer au moins une localisation attendue pour le produit correspondant audit identifiant produit.

Application au suivi, après fabrication, de produits destinés à une installation électrique.

## Description

Le domaine de la présente invention est celui des installations électriques, et, plus particulièrement, celui des procédés permettant la gestion des produits destinés à une telle installation. L'invention a pour objet un procédé de saisie pour un produit destiné à une installation électrique d'un bâtiment, à des fins, entre autres, de support, de traçabilité, de suivi ou encore de contrôle.

US-A-2004/0 178 257 porte sur un dispositif supportant la maintenance d'un parc de luminaires électriques. Un code barre est affecté et fixé à chaque support de luminaire, et une base de données stocke des informations relatives à chaque support. Si le luminaire est défectueux, un agent scanne le code barre, et décrit courtement la maintenance qui en est requise, le tout étant enregistré dans la base de données. Un réparateur peut alors aisément organiser sa tournée ultérieure de maintenance en consultant la base de données. Un rapport lui est proposé, mentionnant un itinéraire, basé sur les localisations des luminaires défectueux.

WO-A-2009/129 563 divulgue un dispositif de suivi géographique de matériel sur un chantier. A son arrivée sur le site du chantier, chaque produit est étiqueté d'un code barre. Un terminal, capable de lire le code barre, coopère avec un terminal GPS pour permettre à un agent d'enregistrer automatiquement, dans une base de données à laquelle ils sont tous deux connectés, la localisation, sur le chantier, du produit associé à un identifiant particulier. Il suffit à l'agent de scanner le code barre, la localisation étant directement identifiée grâce au terminal GPS.

Dans US-A-2005/0 0760 034, un dispositif de suivi de produit est proposé, dans lequel le produit est muni d'un émetteur RFID, détecté par un terminal dont la position peut être identifiée grâce à un système de positionnement global, GPS, afin de relever, et, éventuellement, mettre à jour, dans une base de données dédiée, la localisation du produit.

US-A-2003/0 001 775 divulgue un dispositif de localisation d'objet, utilisant un étiquetage, du type émetteur RFID, des produits à localiser. Un même terminal, apte à détecter l'identifiant dont un produit est pourvu, est aussi muni d'un moyen de localisation en utilisant le système de positionnement global, GPS, permettant ainsi d'enregistrer, dans une base de données, la localisation du produit auquel un identifiant est affecté.

Néanmoins, aucun de ces dispositifs n'intègre l'information nécessaire pour vérifier ultérieurement si un produit a été déplacé par rapport à une localisation à laquelle il est prévu qu'il se trouve. Cette vérification ultérieure peut être utile pour identifier un risque de vol ou de contrefaçon, pour détecter au plus tôt un problème d'acheminement, ou encore pour tenir compte des éventuelles différences entre les normes en vigueur dans différentes zones géographiques. En effet, le démontage d'un ensemble et la commercialisation de ses composants peut être considérée comme un vol.

En outre, de façon générale, dans le domaine particulier des produits destinés à une installation électrique d'un bâtiment, la construction d'un produit est assurée par un fabricant, sa commercialisation par un distributeur, sa mise en service, son éventuelle maintenance ou développement, sont effectuées par un électricien, et le produit est exploité par un utilisateur, sans que le fabricant puisse contrôler le devenir d'un produit après sa fabrication. Cela complique donc, entre autres, la gestion des garanties techniques du produit, ainsi que le contrôle, chez un utilisateur, de la présence d'un produit qui n'est ni volé ni contrefaisant. Un appareil d'installation électrique pouvant être un dispositif de protection de surcharge, il est primordial, pour la sécurité de l'utilisateur, voire de l'électricien mettant en place le produit, d'éviter tout risque d'utilisation d'un produit frauduleux et donc incompatible ou ne remplissant pas correctement sa fonction de protection.

La présente invention a pour but de pallier tout ou partie des inconvénients précédemment cités et vise à mémoriser l'information descriptive d'un ou de plusieurs lieux dans lesquels le produit doit se trouver après sa mise en service et éventuellement aussi lors de son acheminement.

A cet effet, l'invention a pour objet un procédé de saisie pour un produit destiné à une installation électrique d'un bâtiment, ledit produit étant pourvu d'un identifiant produit. Ce procédé est caractérisé en ce qu'il consiste à saisir l'identifiant produit au moyen d'un terminal relié à une base de données, et à enregistrer au moins une localisation attendue 101 pour le produit correspondant audit identifiant produit.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- la figure 1 illustre une étape du procédé selon l'invention, dans laquelle la localisation attendue est enregistrée ;
- la figure 2 illustre un mode de réalisation particulier du procédé selon l'invention et qui comprend une étape de support et de contrôle ;
- la figure 3 illustre une décomposition possible de l'étape de support ;
- la figure 4 illustre à la fois le séquencement et les modes de réalisation possibles des étapes d'un procédé particulier selon l'invention ;
- la figure 5 illustre un mode de réalisation particulier dans lequel, notamment, l'information de la localisation réelle est connue de l'agent ;
- la figure 6 illustre un mode de réalisation particulier dans lequel, notamment, l'information de la localisation est générée par le terminal et n'intégrant pas de vérification après installation, et
- la figure 7 illustre un mode de réalisation particulier ne comprenant aucune étape de support.

L'invention a pour objet un procédé de saisie pour un produit destiné à une installation électrique d'un bâtiment, ledit produit étant pourvu d'un identifiant produit. Un tel produit peut être un composant de tableau électrique ou d'armoire de distribution, comme un disjoncteur, ou un produit physiquement autonome comme un détecteur de mouvement.

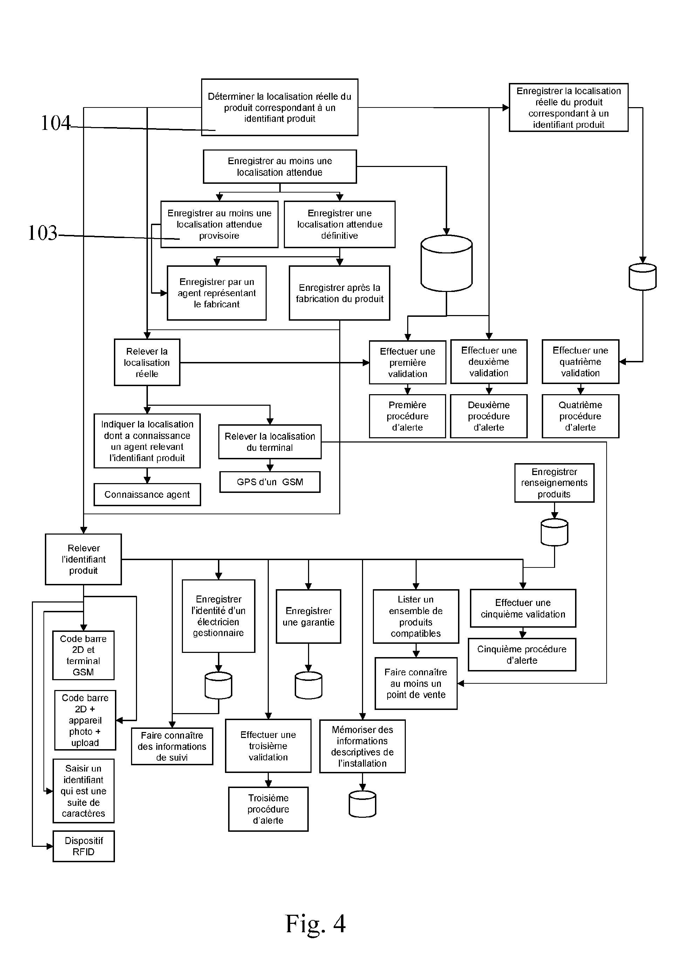

L'identifiant produit est préférentiellement visible sur le produit, notamment dans les cas où il se présente sous la forme d'un signe, d'un symbole, ou d'un ensemble de caractères alphanumériques, imprimé ou gravé sur ce dernier, ou imprimé sur une étiquette fixée sur le produit. Il peut aussi être directement imprimé sur le produit, sans codage ni aucune pièce intermédiaire telle une étiquette. Alternativement, comme le montre la figure 4, l'identifiant peut aussi être intégré dans un dispositif de radio-identification, couramment appelée RFID, auquel cas il n'est pas nécessairement visible.

Selon l'invention, ce procédé consiste à enregistrer le produit dans une base de données, au moyen d'un terminal, préférentiellement mobile, c'est à dire à saisir l'identifiant produit au moyen d'un terminal relié à une base de données, et à enregistrer au moins une localisation attendue 101 pour le produit correspondant audit identifiant produit. Plus particulièrement, enregistrer au moins une localisation attendue 101 consiste à enregistrer une localisation attendue définitive 102 et/ou enregistrer une localisation attendue provisoire 103. L'enregistrement peut être effectué lors de la fabrication du produit, ou postérieurement, à savoir, par exemple, par un distributeur, avant la mise en service du produit, par un électricien, pendant ou après sa mise en service, par l'utilisateur ou un électricien après sa mise en service.

Le procédé est mis en oeuvre par une personne nommée un agent, qui représente, par exemple, le fabricant, le distributeur, l'électricien ou encore l'utilisateur final, en utilisant au moins un terminal connecté à la base de données. Comme il sera expliqué plus loin, le terminal peut être dédié à ce procédé ou non, et peut être un ordinateur, un téléphone portable ou autres. Le terminal communique avec la base de données, et, préférentiellement, est mobile, de sorte à pouvoir être utilisé là où se trouve le produit, lors de son acheminement ou sur le site d'installation. En outre, des terminaux différents peuvent être utilisés aux différentes étapes du procédé. Comme décrit plus loin, le téléphone portable « GSM », Global System for Mobile communication, de l'agent peut servir de terminal pour au moins une des étapes, s'il est muni des fonctionnalités nécessaires. Un terminal non dédié peut être aisément rendu fonctionnel au moyen d'une application logicielle ou au moins d'une interface.

L'identifiant peut être propre à un seul, quelques, plusieurs ou de très nombreux produits physiques. A titre d'exemple, un découpage est proposé ici par type, version, lot et produit physique. D'autres regroupements peuvent être envisagés sans sortir du cadre de l'invention.

Ainsi, l'identifiant peut tout d'abord être propre à un type de produit, et donc être commun à l'ensemble des produits d'un même type, qui seront alors tous pourvus de ce même identifiant. L'identifiant est alors nommé identifiant de type de produit. Alternativement, l'identifiant peut représenter la version du type de produit, l'identifiant étant alors un identifiant de version de produit. Encore alternativement, l'identifiant peut correspondre à un lot de produits, liés, par exemple, par une séquence de fabrication d'une version d'un type de produit, comme une date de fabrication ou encore un site de fabrication, l'identifiant étant alors nommé identifiant de lot de produit. Tous les produits d'un même lot de fabrication sont ainsi pourvus du même identifiant de lot de produit. Préférentiellement, l'identifiant produit est un identifiant de produit physique, spécifique à un produit physique unique. Il peut s'agir d'une identification du produit dans un lot, ou d'un numéro unique quelconque.

L'utilisation d'un identifiant de produit physique permet d'assurer un suivi de chaque produit physique, et, comme il sera décrit plus loin, permet une meilleure précision dans les étapes de support et de contrôle que l'utilisation d'un identifiant commun à plusieurs produits physiques. Ainsi, un identifiant de produit physique est affecté et propre à un seul produit physique. Deux produits physiques différents, mais appartenant au même lot et/ou à la même version et/ou au même type ont chacun un identifiant de produit physique différent. L'identifiant peut, de façon simple, correspondre à une suite de caractères. Une partie des caractères peut être commune au type, une partie commune à la version, une partie commune au lot.

Préférentiellement, et comme pris en compte dans les figures 4 à 7, l'identifiant produit est représenté sous la forme d'un symbole du type code barre à deux dimensions, présent sur ledit produit, éventuellement dans une zone encore visible après sa mise en service. Un code barre à une dimension consiste classiquement en une suite de courts traits parallèles, dont les caractéristiques d'épaisseur et d'espacement varient, codant ainsi une information. Un code barre à une dimension peut donc être utilisé comme un symbole représentant l'identifiant produit par codage. Néanmoins, en particulier si l'identifiant est un identifiant de produit physique, le coder au moyen d'un code barre à une dimension nécessite une grande surface, ce qui peut limiter son application sur des produits de petite taille.

Afin de remédier à ce problème, il est opportun d'utiliser un code barre en deux dimensions, où la suite de traits parallèles est remplacée par un quadrillage dont certains carrés sont noirs, d'autres blancs, de sorte à coder une information. Il devient alors possible de stocker une plus grande quantité d'information tout en occupant moins de place sur le produit. Ce code barre en deux dimensions est donc un symbole qui représente au moins l'identifiant, et dont le produit est pourvu, par impression, gravure, collage, ou autre. Un tel code barre à deux dimensions peut, en outre, coder d'autres informations que l'identifiant, comme, par exemple, le site de production, une licence d'utilisation, l'équipement de production, les composants utilisés, le numéro de batch de production, voire la ou les normes que remplit le produit. Toutefois, si l'identifiant est une information dont le codage par un code barre à une dimension occupe une faible place, le recours à cette technique reste envisageable. En outre, si l'identifiant est une courte suite de caractères et que les dimensions du produit le permettent, cette dernière peut être directement indiquée sur le produit, comme envisagé à la figure 4.

Préférentiellement, c'est en usine que l'identifiant est défini et affecté à un produit physique, ou à un groupe de produits. Cela signifie que c'est le constructeur, c'est-à-dire le fabricant du produit, qui définit l'identifiant qui y correspond. Le fabricant a donc le contrôle de l'identifiant affecté à chaque produit qui en est pourvu. L'identifiant n'est donc pas affecté au produit dans l'unique but, par exemple, d'en suivre la circulation dans un flux logistique ou pour en gérer le stock, bien que sa présence sur le produit, en particulier s'il s'agit d'un identifiant de produit physique, permette aussi de l'utiliser à ces fins. L'identifiant est choisi par le fabricant, et, préférentiellement, physiquement pourvu sur le produit par ses soins. Le fabricant a donc la connaissance du produit affecté à l'identifiant, c'est-à-dire d'un ensemble d'informations relatives à l'au moins un produit physique auquel l'identifiant est affecté, telles que le type de produit, la version, le lot, le site de fabrication, des informations relatives à la commande, ou autres.

De façon générale, l'identifiant, ou l'éventuel symbole qui le représente, peut être placé sur le produit de sorte à être, après sa mise en service, masqué ou visible. Dans le premier cas, comme une opération de démontage partiel sera nécessaire pour faire apparaître le symbole représentant l'identifiant produit ou la suite de caractères qui le constitue, seul un électricien dûment formé sera apte à relever l'identifiant dont le produit est pourvu. Dans le deuxième cas, il reste visible aussi par l'utilisateur qui est alors lui-même apte à relever l'identifiant.

La base de données utilisée pour enregistrer le produit, et, plus particulièrement, pour stocker la au moins une localisation attendue, est consultable par le fabricant, c'est-à-dire qu'il est au moins autorisé à en extraire de l'information, voire est complètement contrôlée par lui, c'est-à-dire qu'il a et contrôle l'accès à la fois en lecture et en écriture. Préférentiellement, c'est le fabricant qui contrôle entièrement l'accès à cette base de données, soit au moyen de la diffusion contrôlée de terminaux physiques dédiés, de mots de passe ou de programmes de connexions, soit en effectuant lui-même toutes consultations et tous enregistrements sollicités éventuellement par le distributeur, l'électricien, l'utilisateur ou un autre agent. Il peut s'agir d'une base de données stockant uniquement la au moins une localisation attendue pour un identifiant, le fabricant contrôlant entièrement l'accès à une autre base de données contenant, par exemple, des informations relatives au site de fabrication du produit affecté à l'identifiant, des informations descriptives techniques, la garantie, etc. Le procédé peut donc être mis en oeuvre au moyen d'une seule ou d'une pluralité de base de données.

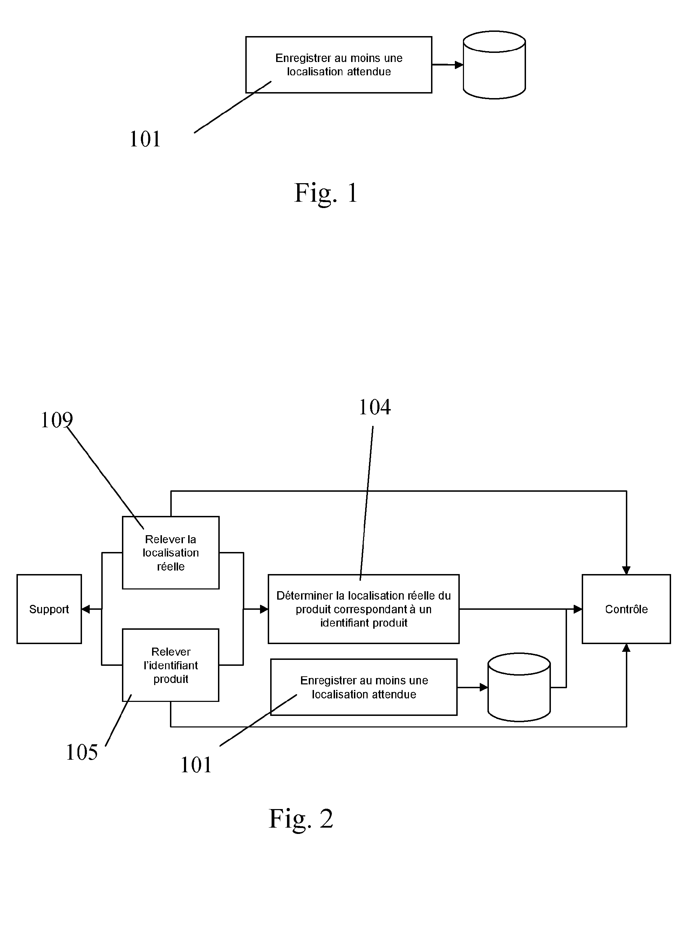

L'étape d'enregistrement du produit consiste donc, comme l'illustrent les figures 2, 4 et 6, à enregistrer au moins une localisation attendue 101, à savoir, d'une part, enregistrer une localisation attendue définitive 102 pour le produit correspondant à un identifiant, et éventuellement aussi en enregistrer au moins une localisation attendue provisoire 103. Une localisation consiste en une zone géographique plus ou moins grande, qui peut être, par exemple, définie par une plage de longitude et de latitude, ou encore par une adresse postale, ou un pays.

La au moins une localisation attendue provisoire représente, par exemple, une zone de transit dans laquelle le produit est supposé se trouver temporairement, entre sa fabrication et son utilisation. Cette localisation attendue est préférentiellement enregistrée par le fabricant, ou, éventuellement, par le distributeur. La localisation attendue définitive correspond à la zone dans laquelle il est prévu que le produit soit mis en service et utilisé. Classiquement, le lieu d'utilisation est unique pour toute la durée de vie d'un produit. Toutefois, si nécessaire, il peut être possible de mémoriser plus d'une localisation attendue définitive.

Selon une caractéristique avantageuse possible, illustrée dans les figures 2, 4, 5 et 7, le procédé comprend, en outre, une étape dite de vérification consistant, au moyen du ou d'un autre terminal, à déterminer la localisation réelle du produit correspondant à un identifiant produit 104 particulier, à savoir, d'une part, relever l'identifiant produit 105 dont ledit produit est pourvu, et, d'autre part, relever la localisation réelle 109 de ce produit. Dans cette étape, il s'agit donc de coupler l'information d'un identifiant et l'information d'une localisation réelle pour le produit pourvu de cet identifiant.

L'étape de vérification est préférentiellement réalisée lors de la distribution du produit, ou encore pendant ou après sa mise en service. De façon générale, déterminer la localisation réelle du produit correspondant à un identifiant produit 104 est donc réalisé avant, pendant ou après la mise en service dudit produit. A titre d'exemple, cette étape peut être mise en oeuvre par un agent en charge de l'acheminement du produit. Il lui sera alors possible de vérifier, comme décrit plus loin, que le parcours suivi par le produit lors de son acheminement correspond à celui qui était prévu. La vérification peut aussi être effectuée par le distributeur. Cela permet de détecter un éventuel problème dans l'acheminement, voire un détournement de produits. Cette étape peut aussi être réalisée par l'électricien chargé de la mise en service d'un produit dans une installation, celui-ci pouvant alors vérifier qu'il met effectivement en place le produit attendu. Enfin, cette étape peut être mise en oeuvre par un utilisateur ou un électricien, pour un produit particulier, sur son site d'utilisation, après sa mise en service. Elle lui permettra, comme décrit plus loin, de contrôler si le produit est effectivement utilisé là où il est destiné à l'être.

Préférentiellement, et comme le montrent les figures 4, 6 et 7, relever la localisation réelle 109 du produit consiste à relever la localisation du terminal 106 alors qu'il est utilisé pour relever l'identifiant produit 105 dont le produit est pourvu. Cela implique donc que le terminal utilisé soit à la fois capable de relever l'identifiant et d'être géolocalisé. Un téléphone portable muni d'un dispositif de positionnement par satellite, du type GSM-GPS est un terminal permettant de réaliser cela, comme envisagé dans les figures 4, 6 et 7. La localisation du terminal peut alors être renseignée de façon automatique, sans intervention de l'agent, ou l'agent peut simplement être informé, par un affichage sur le terminal, de la position qu'il devra alors saisir lui-même. A titre d'exemple, le document US-A-2008/0 261 626 décrit un procédé permettant d'envoyer, sous la forme d'un message d'un service de message court, SMS, à une destination définie par un utilisateur, la localisation d'un téléphone portable, identifiée au moyen d'un système de positionnement global, GPS. L'homme du métier pourra, bien entendu, utiliser tout autre mode de réalisation pour la transmission de la localisation du terminal.

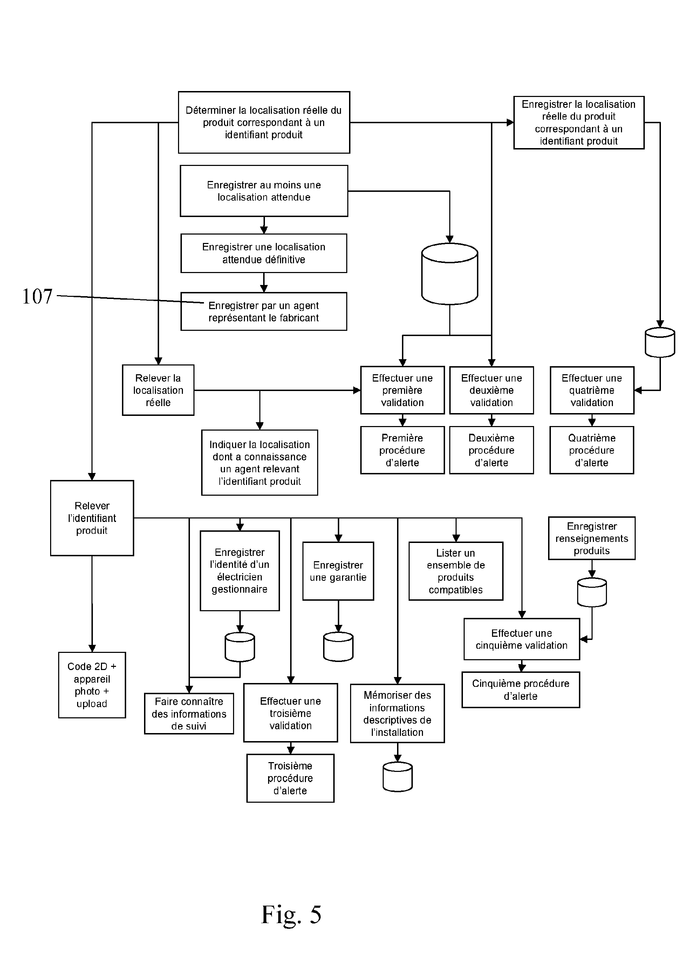

Alternativement, et comme le montre la figure 5, relever la localisation réelle 109 du produit peut se faire par la simple connaissance d'une adresse postale, plus ou moins précise, correspondant au lieu où l'identifiant a été relevé et consiste ainsi à indiquer la localisation dont a connaissance un agent relevant l'identifiant produit. L'agent utilise donc le terminal pour relever l'identifiant produit 105, et renseigne, éventuellement ultérieurement, notamment dans le cas où le terminal utilisé pour relever l'identifiant produit 105 ne communique pas avec la base de données, la localisation à laquelle il a relevé ledit identifiant. L'information de cette localisation provient, dans ce cas, directement de l'agent, qui sait où l'identifiant a été relevé, alors que, dans le cas précédent, le terminal informe l'agent de cette localisation.

Selon une caractéristique possible illustrée aux figures 4 et 5, la localisation attendue, notamment la localisation attendue provisoire et/ou la localisation attendue définitive, est enregistrée par un agent représentant le fabricant 107, dans la base de données, préférentiellement dans le cadre de la fabrication du produit. La localisation attendue définitive ou l'au moins une localisation attendue provisoire correspondent, par exemple, à une adresse postale plus ou moins précise, des coordonnées de latitude et longitude ou autres. Lorsque l'identifiant est un identifiant de lot de produit, la localisation attendue définitive peut être un pays. Si l'identifiant est un identifiant de produit physique, la localisation attendue définitive peut être plus précise.

Selon une caractéristique alternative illustrée aux figures 4, 6 et 7, la localisation attendue, notamment la localisation attendue provisoire et/ou la localisation attendue définitive, est enregistrée après la fabrication dudit produit 108, en relevant l'identifiant produit 105 dont le produit est pourvu, puis en relevant la localisation réelle 109 du produit, préférentiellement par un agent qui ne représente pas le fabricant, notamment un agent représentant un distributeur du produit, un électricien mettant en service le produit, ou encore un utilisateur exploitant le produit. Préférentiellement, cet enregistrement est effectué lors de la mise en service du produit, par un électricien. Bien entendu, cet enregistrement peut être réalisé par un électricien intervenant sur le produit ou l'installation bien après la mise en service.

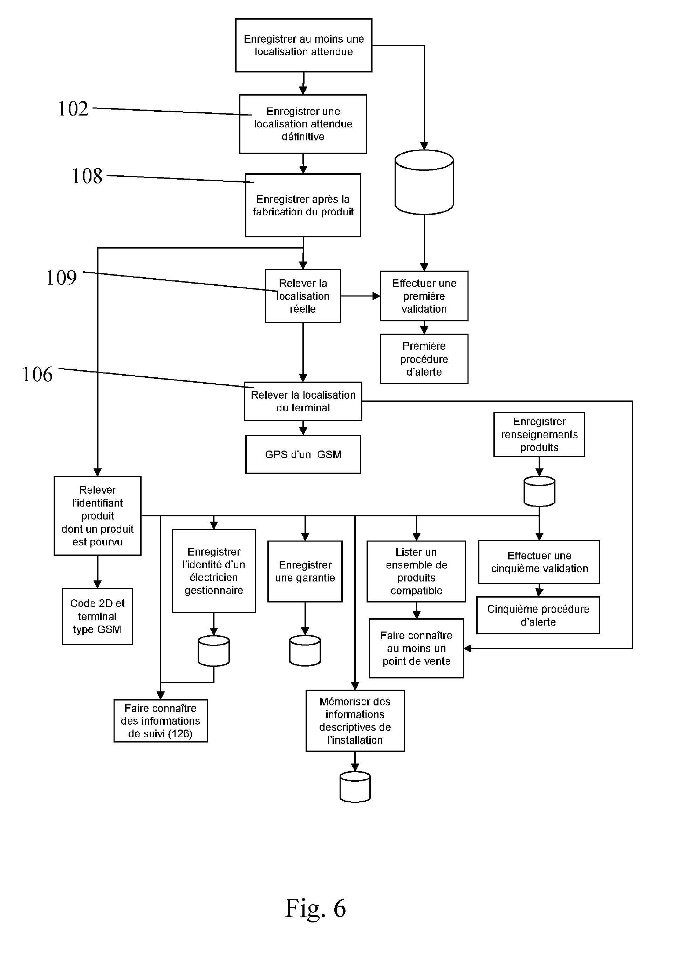

Dans ce mode de réalisation, pour enregistrer une localisation attendue définitive 102 pour le produit correspondant à un identifiant, il est donc nécessaire de relever l'identifiant produit 105 dont ce produit est pourvu, puis de relever la localisation réelle 109 du produit, soit, comme l'illustre la figure 6, en relevant la localisation du terminal 106 ayant servi à relever l'identifiant, soit en indiquant la localisation dont l'agent a connaissance. Ce dernier cas peut être particulièrement intéressant lorsque l'identifiant n'est pas relevé au niveau de la localisation attendue définitive, comme, par exemple, lorsque l'agent qui enregistre la localisation attendue définitive 102 représente un distributeur du produit, voire un agent chargé de son acheminement et donc lorsque relever la localisation réelle 109 n'est pas réalisé au niveau de la localisation attendue définitive.

Il convient, en outre, de noter que la localisation attendue définitive peut être la même pour un ensemble de produits, comme pour les composants d'un tableau électrique. Avantageusement, il peut donc être possible, en une seule opération, d'enregistrer la même localisation définitive attendue pour différents identifiants de produit physique.

Avantageusement, comme le montre la figure 6, et au moins pour enregistrer au moins une localisation attendue 101 et/ou déterminer la localisation réelle du produit correspondant à un identifiant produit 104, le terminal utilisé pour relever l'identifiant produit 105 dont un produit est pourvu est un terminal mobile, dédié ou non à cette opération, communicant avec la base de données et pourvu d'un capteur optique, notamment un téléphone portable type GSM, un smartphone, un PDA, grâce auquel le symbole représentant l'identifiant peut être capturé, et éventuellement décodé. Comme mentionné précédemment, l'identifiant est préférentiellement représenté symboliquement au moyen d'un code barre en deux dimensions. Dans ce cas, l'agent utilise le terminal mobile pour capturer une image de ce code barre en deux dimensions, ce qui peut aisément être réalisé grâce à la fonction photographique d'un téléphone portable GSM courant. Son décodage, c'est-à-dire l'extraction de l'identifiant, est faite soit directement par le terminal, au moyen d'une application logicielle adaptée et dont la diffusion est avantageusement contrôlée par le fabricant, soit par une unité de traitement à laquelle le terminal envoi l'image capturée.

Alternativement, comme dans le cas de la figure 5, l'agent peut réaliser une simple photographie avec un appareil photographique numérique classique, puis, au moyen d'un ordinateur adapté, envoyer cette photo à l'unité de traitement pour décodage et extraction de l'identifiant. Ce dernier peut être retourné à l'agent pour information, ou pour lui permettre de saisir ledit identifiant pour l'étape consistant à déterminer la localisation réelle du produit correspondant à un identifiant produit 104 ou pour l'étape d'enregistrement après la fabrication dudit produit 108. Dans ce cas, le terminal utilisé pour relever l'identifiant produit 105 dont un produit est pourvu est donc un terminal fixe, communicant avec la base de données et utilisé pour renseigner le symbole qui représente l'identifiant produit.

Encore alternativement, comme mentionné dans la figure 4, l'agent relève l'identifiant produit 105 simplement en saisissant, grâce à un terminal connecté à la base de données, une suite de caractères présents sur le produit et formant l'identifiant. Cette saisie peut, bien entendu, être effectuée sur le site où le produit a été mis en service, au moyen d'un terminal portable tel que le téléphone portable GSM de l'agent, ou ailleurs, au moyen d'un simple ordinateur dûment connecté.

De même, et pour enregistrer au moins une localisation attendue 101 et/ou déterminer la localisation réelle du produit correspondant à un identifiant produit 104, comme l'illustrent les figures 4, 6 et 7, l'étape consistant à relever la localisation réelle 109 d'un produit est effectuée en relevant la localisation d'un terminal 106 alors qu'il se trouve à proximité du produit, ledit terminal étant mobile, dédié ou non à cette opération, préférentiellement communicant avec la base de données, et pourvu d'un moyen de géolocalisation par satellite, du type Global Positioning System dit « GPS », notamment le terminal permettant de relever l'identifiant produit 105, un téléphone portable type GSM, un smartphone, un PDA, un détecteur GPS routier, le terminal faisant éventuellement connaître lui-même ses coordonnées directement à la base de données de sorte qu'aucune saisie par l'agent n'est nécessaire. Bien entendu, le terminal peut faire connaître ses coordonnées de façon semi-automatique, par exemple, par affichage des coordonnées sur le terminal, puis en laissant l'agent ordonner l'envoi à la base après vérification et validation. Le terminal mobile peut être le téléphone portable GSM de l'agent, sur lequel une application logicielle a été installée.

Par conséquent, dans un mode de réalisation particulièrement avantageux, le téléphone portable GSM de l'agent est utilisé comme terminal, d'une part, pour relever la localisation réelle 109, grâce à son dispositif de géolocalisation par satellite, GPS, lui permettant d'être utilisé pour relever la localisation du terminal 106, et, d'autre part, pour relever l'identifiant produit 105, par la saisie optique du symbole, alors sous la forme d'un code barre à deux dimensions représentant au moins ledit identifiant produit, grâce à la fonction d'appareil photographique dudit téléphone. Une application logicielle peut être installée au préalable dans le téléphone au moins pour décoder le symbole représentant l'identifiant produit.

Alternativement, comme l'illustre la figure 5, pour enregistrer au moins une localisation attendue 101 et/ou déterminer la localisation réelle du produit correspondant à un identifiant produit 104, l'étape consistant à relever la localisation réelle 109 est effectuée au moyen d'un terminal connecté à la base de données et en indiquant la localisation du produit dont a connaissance un agent relevant l'identifiant, notamment une adresse postale ou une latitude et longitude. Le terminal peut être un terminal mobile, tel qu'un téléphone portable, un ordinateur de poche, un PDA, etc. Il peut aussi s'agir d'un ordinateur personnel, fixe, connecté à la base de données, l'agent pouvant alors, en dehors du site de l'installation, enregistrer la localisation attendue ou la localisation réelle du produit dont il a relevé l'identifiant. L'agent peut, par exemple, avoir été informé de la localisation par un dispositif de géolocalisation qu'il utilise à l'endroit où le produit se trouve.

En outre, dans une application de ce procédé destinée à vérifier l'existence d'une contrefaçon ou d'un vol, le procédé comprend une étape de contrôle, représentée à la figure 2, faite d'au moins l'une des validations et alertes, déclenchées le cas échéant, décrites ci-dessous et illustrées dans les figures 4 à 7.

Une première validation consiste à vérifier, en même temps qu'enregistrer au moins une localisation attendue 101, en particulier lors de l'enregistrement après la fabrication du produit 108, si une localisation attendue différente a déjà été renseignée dans la base de données, et ce pour la localisation attendue définitive ou une des localisations attendues provisoires.

La localisation attendue, définitive ou provisoire, déjà présente dans la base de données, peut tout d'abord avoir été enregistrée par un agent représentant le fabricant 107, voir figure 5, auquel cas, par exemple, l'électricien mettant en service le produit dans une installation particulière, et souhaitant en enregistrer une localisation attendue définitive 102 en tant qu'agent qui ne représente pas le fabricant, peut être informé, par affichage sur le terminal utilisé, d'un détournement de produit. Il peut s'agir, par exemple, du résultat du démontage d'un produit faisant partie d'un ensemble destiné à une autre installation. Cela peut aussi montrer qu'un produit est sur le point d'être exploité dans une zone différente de celle pour laquelle il est homologué.

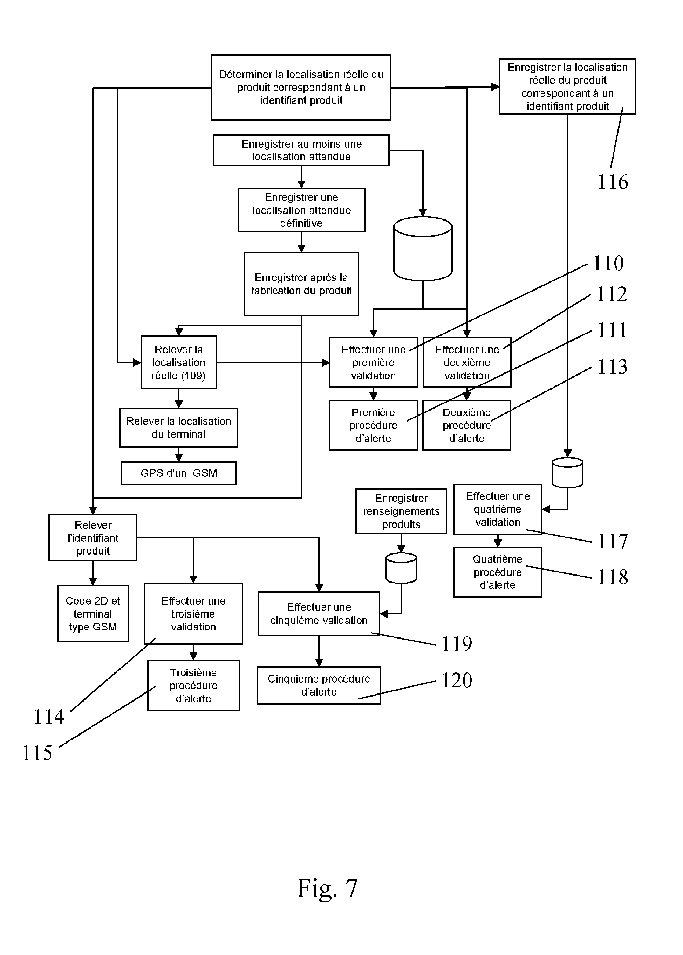

La localisation attendue définitive ou provisoire, déjà présente dans la base de données, peut aussi avoir été enregistrée après la fabrication du produit 108, par un agent qui ne représente pas le fabricant, par exemple lors de la mise en service d'un produit ayant cet identifiant, voir figures 4 ou 7. Cela peut, par exemple, être le signe que le produit a déjà été installé une fois, puis démonté, revendu, ou encore que le produit est une reproduction d'un produit déjà mis en service et dont la localisation attendue définitive a été enregistrée à cette occasion.

La première procédure d'alerte 111 consiste préférentiellement à indiquer, au niveau du terminal utilisé par l'agent, l'existence d'une autre localisation attendue définitive ou d'une autre localisation attendue provisoire, et en informer éventuellement aussi le fabricant, automatiquement ou après un ordre de l'agent via le terminal.

Ainsi, le procédé comprend, en outre, une étape consistant à effectuer une première validation 110 revenant à vérifier si un lieu différent ou n'englobant pas la localisation réelle relevée, pour enregistrer après la fabrication du produit 108, voire pour déterminer la localisation réelle du produit correspondant à un identifiant produit 104, est déjà enregistré en tant que localisation attendue définitive ou provisoire dans la base de données, et une première procédure d'alerte 111, mise en oeuvre si un tel lieu est effectivement déjà connu. Cette première validation permet donc, notamment, d'identifier et de signaler un risque de vol ou de contrefaçon avant la mise en service.

Une deuxième validation consiste à vérifier que le produit se trouve bien à sa localisation attendue, définitive ou provisoire. Ainsi, le procédé comprend, en outre, une étape consistant à effectuer une deuxième validation 112 revenant à comparer une localisation réelle, notamment identifiée pour déterminer la localisation réelle du produit correspondant à un identifiant produit 104, avec une localisation attendue définitive ou provisoire, préalablement enregistrée dans la base de données, et une deuxième procédure d'alerte 113, mise en oeuvre si une différence apparaît ou s'il apparaît que la localisation réelle n'est pas englobée dans ladite localisation attendue. L'agent, s'il intervient lors du transit, peut donc vérifier si le produit transite par le circuit prévu pour lui, ou, s'il intervient pendant ou après la mise en service, que cette dernière est ou a été effectuée à la localisation prévue. Dans le cas contraire, cela peut être un signe qu'un produit a été volé et déplacé, ou encore que l'identifiant a été frauduleusement marqué sur un produit éventuellement contrefaisant. La deuxième procédure d'alerte 113 consiste préférentiellement à informer l'agent de l'existence d'une anomalie, et à lui permettre, par exemple et si cela se justifie, de corriger la localisation attendue définitive. Le fabricant peut aussi être prévenu, automatiquement ou au choix de l'agent.

Une troisième validation consiste à s'assurer que l'identifiant existe et est connue dans la base de données. Pour ce faire, le procédé comprend, en outre, une étape consistant à effectuer une troisième validation 114 revenant à vérifier que l'identifiant produit est connu et/ou qu'un produit y est associé et/ou que, le cas échéant, le ou un symbole représentant l'identifiant produit est reconnu, et une troisième procédure d'alerte 115, mise en oeuvre dans le cas contraire. Ainsi, si l'identifiant est représenté sur le produit par un symbole, il convient tout d'abord de valider que ce symbole est reconnu, c'est-à-dire qu'il correspond effectivement à un identifiant. Dans le cas contraire, si le symbole ne peut être décodé avec les règles utilisées par le fabricant de sorte à en extraire un identifiant, le produit peut être une contrefaçon. Si le symbole correspond effectivement à un identifiant, ou si l'identifiant est mentionné sans codage ni représentation symbolique sur le produit, il convient de vérifier que cet identifiant est effectivement connu, c'est-à-dire répertorié dans la base de données et qu'au moins un produit y a été associé.

La troisième procédure d'alerte 115 correspond alors préférentiellement à faire savoir à l'agent, au niveau du terminal, que l'identifiant pose problème, par exemple au niveau du décodage du symbole qui le représente. Cette troisième validation permet donc, entre autres, de signaler un risque de contrefaçon.

Une quatrième validation, voir figures 4, 5 et 7, consiste à vérifier que la même localisation réelle est systématiquement détectée pour un même identifiant et qu'elle correspond bien à la localisation attendue définitive. A cette fin, le procédé comprend, en outre, une étape consistant, automatiquement ou sur demande, à enregistrer la localisation réelle d'un produit correspondant à un identifiant produit 116, si celle-ci est relevée après la mise en service du produit, ainsi qu'une étape consistant à effectuer une quatrième validation 117 revenant à détecter une variation entre ces éventuelles multiples valeurs de localisation réelle et/ou une différence avec la localisation attendue définitive, et une quatrième procédure d'alerte 118 mise en oeuvre si une différence excessive est détectée. Ainsi, lorsqu'un identifiant est répété de façon frauduleuse sur un grand nombre de produits, voire sur des produits de types différents, il est possible de détecter que plusieurs localisations réelles sont relevées pour un même identifiant, ce qui permet d'identifier un risque de contrefaçon. Cette quatrième validation contribue ainsi à vérifier qu'un seul produit physique unitaire porte un identifiant de produit physique afin, notamment, d'identifier et signaler un risque de contrefaçon.

Cette validation est d'autant plus grossière que l'identifiant produit est affecté à un grand nombre de produits physiques.

La quatrième procédure d'alerte correspond alors à faire savoir à l'agent qui détermine la localisation réelle du produit correspondant à un identifiant produit 104, qu'il existe un risque que ce produit soit illégal, et à lui donner l'opportunité d'avertir le fabricant.

Bien entendu, les comparaisons de localisation, mentionnées précédemment dans les différentes étapes de validation, sont réalisées de sorte à ne pas tenir compte d'une différence trop faible.

Une cinquième validation se base sur une vérification approximative, qui fait intervenir l'agent relevant l'identifiant dont le produit est pourvu, et consiste à lui faire connaître des informations descriptives du produit associé à l'identifiant relevé. Ainsi, le procédé comprend, en outre, une étape consistant à enregistrer, dans la base de données, un descriptif du produit associé à un identifiant produit, une étape consistant à effectuer une cinquième validation 119 revenant à faire connaître, notamment à afficher au niveau du ou d'un terminal, tout ou partie dudit descriptif du produit correspondant à l'identifiant produit relevé, et une cinquième procédure d'alerte 120 qui peut être mise en oeuvre sur demande dans le cas où l'agent estime que le produit ne correspond pas.

Le descriptif du produit enregistré à cette étape, peut être sa description technique, le type de produit, la désignation complète du produit, de ses composants, de ses caractéristiques, une photo, ou autre. Ce descriptif peut être enregistré par le fabricant, le distributeur, l'électricien, l'utilisateur, ou un autre agent. Cet enregistrement peut s'effectuer par une sélection parmi un ensemble d'options qui sont proposées. Le descriptif du produit est présenté préférentiellement sur le terminal ayant servi à relever l'identifiant dont un produit est pourvu. Cela permet donc de faire connaître à l'électricien qui met en service le produit, ou qui vérifie, ou encore à l'utilisateur final, de voir si le produit qu'il manipule ou utilise semble correspondre au produit qui a été affecté à l'identifiant. Cette cinquième validation permet ainsi, notamment, de contribuer à l'identification d'une contrefaçon.

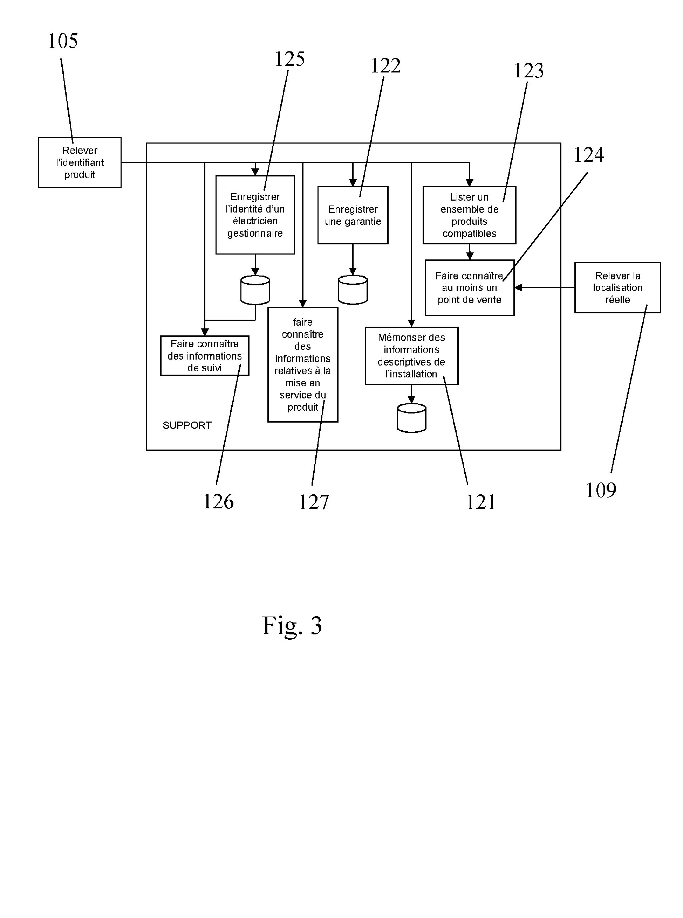

De plus, selon une caractéristique avantageuse possible de l'invention, le procédé comprend, en outre, une étape de support, figure 2 et 3, afin d'assister au moins un agent. Ainsi, comme le montrent les figures 3 à 6, le procédé comprend, en outre, l'étape consistant, au moyen du ou d'un terminal, à mémoriser des informations descriptives de l'installation 121 dans laquelle à été mis en service le produit correspondant à un identifiant de produit physique. Cette étape permet de réaliser une mémorisation de l'installation. Les informations descriptives peuvent être des photographies, une séquence audio/vidéo, du texte, ou autre.

Afin d'assurer les garanties techniques données par le constructeur, et selon une caractéristique possible illustrée aux figures 3 à 6, le procédé comprend, en outre, l'étape consistant, au moyen du ou d'un terminal, à enregistrer une garantie 122 pour le produit correspondant à un identifiant de produit physique.

Le procédé comprend préférentiellement aussi une étape qui consiste à faire connaître des informations relatives à la mise en service du produit 127 correspondant à l'identifiant produit relevé, telles que notice de montage ou conseils pratiques, sous la forme de textes, images, et/ou vidéos, affichés sur le terminal de l'agent.

Dans un mode de réalisation particulier, le procédé comprend, en outre, une étape consistant, au moyen du ou d'un terminal, à enregistrer l'identité d'un électricien gestionnaire 125 pour le produit correspondant à un identifiant de produit physique. Cette étape est réalisée lors de la vente, de la mise en service, d'une opération de maintenance ou autre, et permet de faire connaître ultérieurement à l'installateur électrique gestionnaire des modalités d'opération consécutives à la mise en service, comme un rappel de produit ou une maintenance. L'identité de l'électricien gestionnaire peut être une référence particulière, une adresse, une dénomination sociale, ou autre. Préférentiellement, c'est le fabricant qui contrôle la mémorisation de cette information dans la base de données.

Il est aussi possible de stocker des informations relatives à l'utilisateur final du produit correspondant à un identifiant de produit physique.

Enregistrer une garantie 122, mémoriser des informations descriptives de l'installation 121, enregistrer l'identité d'un électricien gestionnaire 125, enregistrer au moins une localisation attendue 101 ainsi que la localisation réelle d'un produit correspondant à un identifiant produit 116 peuvent se faire en utilisant la même base de données ou des bases différentes.

Pour faciliter la mise en service du produit, son remplacement, ou le développement de l'installation dans laquelle il se trouve, et selon un mode de réalisation particulier, le procédé comprend, en outre, une étape consistant à lister un ensemble de produits compatibles 123 avec le produit correspondant à un identifiant produit, notamment par affichage sur le ou un terminal. Cette étape permet ainsi de faire connaître à l'agent, notamment à l'électricien chargé de la mise en service, un ensemble de produits compatibles avec celui dont il a relevé l'identifiant. Cela peut aussi permettre à un distributeur de s'organiser en fonction des compatibilités de produits, ou encore à un électricien en charge de mettre en service le produit de connaître les produits compatibles pour compléter l'installation.

De façon cohérente, le procédé comprend, en outre, une étape consistant à faire connaître au moins un point de vente 124, notamment par affichage sur le ou un terminal, pour un produit particulier, à proximité d'un endroit défini, préférentiellement l'endroit où la localisation réelle a été relevée 105. Cette étape est réalisée préférentiellement pendant ou après la mise en service du produit dans l'installation. Ainsi, un électricien en charge de la mise en service, de la maintenance, de la mise à jour, ou d'une autre activité sur l'installation, peut être informé de la disponibilité d'un produit dont il a relevé l'identifiant, à proximité de sa propre localisation. L'électricien peut être localisé grâce au dispositif de positionnement GPS du terminal qu'il utilise, préférentiellement grâce à son téléphone portable GSM équipé GPS. Avantageusement, il est donc possible de renseigner l'agent, tout d'abord, sur le type de produits compatibles avec celui auquel correspond l'identifiant qu'il a relevé, puis des lieux de vente à proximité, pour l'un d'entre eux, qu'il aura retenu.

Enfin, avantageusement, le procédé comprend, en outre, une étape consistant à faire connaître des informations de suivi 126, notamment par affichage sur le ou un terminal, telles qu'un risque de défaut ou un besoin de maintenance ou de retour du produit correspondant à un identifiant produit. Ainsi, lorsque l'identifiant est relevé, un message peut s'afficher sur le terminal stipulant que ce produit nécessite d'être remplacé, qu'une maintenance en est nécessaire, ou qu'il est nécessaire de le faire vérifier. Il peut ainsi être possible à l'utilisateur de vérifier lui-même, au moyen de son téléphone portable, en relevant le symbole sur le produit, de déterminer si son produit est couvert par une campagne de rappel de produits ou de maintenance. Cette étape peut aussi être mise en oeuvre par un électricien souhaitant vérifier si le produit qu'il manipule doit faire l'objet d'un remplacement, même partiel. Il suffit ainsi à l'électricien ou à l'utilisateur, par exemple, de télécharger une application logicielle dédiée disponible auprès du fabricant, de photographier le symbole au moyen de son téléphone portable, ou de saisir l'identifiant dont le produit est pourvu, pour que ladite application l'informe que le produit correspondant à l'identifiant est concerné ou non par le rappel ou la maintenance. Il est possible de faire connaître ses informations soit directement après l'étape consistant à relever l'identifiant produit 105 soit à l'électricien gestionnaire, après mise en service du produit.

Ainsi, l'étape de support est faite d'au moins l'une des étapes décrites ci-dessus et consistant respectivement à mémoriser des informations descriptives de l'installation 121, enregistrer une garantie 122, lister un ensemble de produits compatibles 123, faire connaître au moins un point de vente 124, enregistrer l'identité d'un électricien gestionnaire 125, faire connaître des informations de suivi 126, faire connaître des informations relatives à la mise en service 127, ou déverrouiller le produit 128.

Grâce à l'invention, il est donc possible de mémoriser l'information descriptive d'un ou de plusieurs lieux dans lesquels le produit doit se trouver après sa mise en service et éventuellement aussi lors de son acheminement, grâce à l'enregistrement d'une localisation attendue définitive, pour le lieu d'utilisation, ou d'au moins une localisation attendue provisoire, pour l'acheminement du produit.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de saisie pour un produit destiné à une installation électrique d'un bâtiment, ledit produit étant pourvu d'un identifiant produit, procédé **caractérisé en ce qu'**il consiste à saisir l'identifiant produit au moyen d'un terminal relié à une base de données, et à enregistrer au moins une localisation attendue (101) pour le produit correspondant audit identifiant produit.

2. Procédé selon la revendication 1, **caractérisé en ce qu'**enregistrer au moins une localisation attendue (101) consiste à enregistrer une localisation attendue définitive (102) et/ou enregistrer une localisation attendue provisoire (103).

3. Procédé selon l'une quelconque des revendications 1 ou 2, **caractérisé en ce qu'**il comprend, en outre, une étape dite de vérification consistant, au moyen du ou d'un autre terminal, à déterminer la localisation réelle du produit correspondant à un identifiant produit (104) particulier, à savoir, d'une part, relever l'identifiant produit (105) dont ledit produit est pourvu, et, d'autre part, relever la localisation réelle (109) de ce produit.

4. Procédé selon l'une quelconque des revendications 1 à 3, **caractérisé en ce que** la localisation attendue est enregistrée par un agent représentant le fabricant (107), dans la base de données, préférentiellement dans le cadre de la fabrication du produit.

5. Procédé selon l'une quelconque des revendications 1 à 3, **caractérisé en ce que** la localisation attendue est enregistrée après la fabrication dudit produit (108), en relevant l'identifiant produit (105) dont le produit est pourvu, puis en relevant la localisation réelle (109) du produit, préférentiellement par un agent qui ne représente pas le fabricant, notamment un agent représentant un distributeur du produit, un électricien mettant en service le produit, ou encore un utilisateur exploitant le produit.

6. Procédé selon l'une quelconque des revendications 1 à 5, **caractérisé en ce que** l'identifiant produit est un identifiant de produit physique, spécifique à un produit physique unique.

7. Procédé selon l'une quelconque des revendications 1 à 6, **caractérisé en ce que** l'identifiant produit est représenté sous la forme d'un symbole du type code barre à deux dimensions, présent sur ledit produit, éventuellement dans une zone encore visible après sa mise en service.

8. Procédé selon la revendication 2 et selon l'une quelconque des revendications 5 à 7, **caractérisé en ce qu'**il comprend, en outre, une étape consistant à effectuer une première validation (110) revenant à vérifier si un lieu différent ou n'englobant pas la localisation réelle relevée, pour enregistrer après la fabrication du produit (108), voire pour déterminer la localisation réelle du produit correspondant à un identifiant produit (104), est déjà enregistré en tant que localisation attendue définitive ou provisoire dans la base de données, et une première procédure d'alerte (111), mise en oeuvre si un tel lieu est effectivement déjà connu.

9. Procédé selon la revendication 2 et l'une quelconque des revendications 1 à 8, **caractérisé en ce qu'**il comprend, en outre, une étape consistant à effectuer une deuxième validation (112) revenant à comparer une localisation réelle, notamment identifiée pour déterminer la localisation réelle du produit correspondant à un identifiant produit (104), avec une localisation attendue définitive ou provisoire, préalablement enregistrée dans la base de données, et une deuxième procédure d'alerte (113), mise en oeuvre si une différence apparaît ou s'il apparaît que la localisation réelle n'est pas englobée dans ladite localisation attendue.

10. Procédé selon l'une quelconque des revendications 1 à 9 **caractérisé en ce qu'**il comprend, en outre, une étape consistant à effectuer une troisième validation (114) revenant à vérifier que l'identifiant produit est connu et/ou qu'un produit y est associé et/ou que, le cas échéant, le ou un symbole représentant l'identifiant produit est reconnu, et une troisième procédure d'alerte (115), mise en oeuvre dans le cas contraire.

11. Procédé selon l'une quelconque des revendication 2 à 10, **caractérisé en ce qu'**il comprend, en outre, une étape consistant, automatiquement ou sur demande, à enregistrer la localisation réelle d'un produit correspondant à un identifiant produit (116), si celle-ci est relevée après la mise en service du produit, ainsi qu'une étape consistant à effectuer une quatrième validation (117) revenant à détecter une variation entre ces éventuelles multiples valeurs de localisation réelle et/ou une différence avec la localisation attendue définitive, et une quatrième procédure d'alerte (118) mise en oeuvre si une différence excessive est détectée.

12. Procédé selon l'une quelconque des revendications 1 à 11, **caractérisé en ce qu'**il comprend, en outre, une étape consistant à enregistrer, dans la base de données, un descriptif du produit associé à un identifiant produit, une étape consistant à effectuer une cinquième validation (119) revenant à faire connaître, notamment à afficher au niveau du ou d'un terminal, tout ou partie dudit descriptif du produit correspondant à l'identifiant produit relevé, et une cinquième procédure d'alerte (120) qui peut être mise en oeuvre sur demande dans le cas où l'agent estime que le produit ne correspond pas.

13. Procédé selon la revendication 6 et l'une quelconque des revendications 1 à 12, **caractérisé en ce qu'**il comprend, en outre, l'étape consistant, au moyen du ou d'un terminal, à mémoriser des informations descriptives de l'installation (121) dans laquelle à été mis en service le produit correspondant à un identifiant de produit physique.

14. Procédé selon la revendication 6 et l'une quelconque des revendications 1 à 13, **caractérisé en ce qu'**il comprend, en outre, l'étape consistant, au moyen du ou d'un terminal, à enregistrer une garantie (122) pour le produit correspondant à un identifiant de produit physique.

15. Procédé selon l'une quelconque des revendications 1 à 14, **caractérisé en ce qu'**il comprend, en outre, une étape consistant à lister un ensemble de produits compatibles (123) avec le produit correspondant à un identifiant produit, notamment par affichage sur le ou un terminal.

16. Procédé selon l'une quelconque des revendications 1 à 15, **caractérisé en ce qu'**il comprend, en outre, une étape consistant à faire connaître au moins un point de vente (124), notamment par affichage sur le ou un terminal, pour un produit particulier, à proximité d'un endroit défini.

17. Procédé selon l'une quelconque des revendications 1 à 16, **caractérisé en ce qu'**il comprend, en outre, une étape consistant, au moyen du ou d'un terminal, à enregistrer l'identité d'un électricien gestionnaire (125) pour le produit correspondant à un identifiant de produit physique.

18. Procédé selon l'une quelconque des revendications 1 à 17, **caractérisé en ce qu'**il comprend, en outre, une étape consistant à faire connaître des informations de suivi (126), notamment par affichage sur le ou un terminal, telles qu'un risque de défaut ou un besoin de maintenance ou de retour du produit correspondant à un identifiant produit.

19. Procédé selon la revendication 7 et l'une quelconque des revendications 1 à 18, **caractérisé en ce que** le terminal utilisé pour relever l'identifiant produit (105) dont un produit est pourvu est un terminal mobile, dédié ou non à cette opération, communicant avec la base de données et pourvu d'un capteur optique, notamment un téléphone portable type GSM, un smartphone, un PDA, grâce auquel le symbole représentant l'identifiant peut être capturé, et éventuellement décodé.

20. Procédé selon l'une quelconque des revendications 1 à 19, **caractérisé en ce que** l'étape consistant à relever la localisation réelle (109) d'un produit est effectuée en relevant la localisation d'un terminal (106) alors qu'il se trouve à proximité du produit, ledit terminal étant mobile, dédié ou non à cette opération, préférentiellement communicant avec la base de données, et pourvu d'un moyen de géolocalisation par satellite, du type Global Positionning System dit « GPS », notamment le terminal permettant de relever l'identifiant produit (105), un téléphone portable type GSM, un smartphone, un PDA, un détecteur GPS routier, le terminal faisant éventuellement connaître lui-même ses coordonnées directement à la base de données.

21. Procédé selon l'une quelconque des revendications 1 à 20, **caractérisé en ce que** l'étape consistant à relever la localisation réelle (109) est effectuée au moyen d'un terminal connecté à la base de données et en indiquant la localisation du produit dont a connaissance un agent relevant l'identifiant, notamment une adresse postale ou une latitude et longitude.
